(19) Europäisches Patentamt

European Patent Office

Office européen des brevets

(11) **EP 1 375 567 B1**

(12) **EUROPÄISCHE PATENTSCHRIFT**

(45) Veröffentlichungstag und Bekanntmachung des Hinweises auf die Patenterteilung:
**22.11.2006 Patentblatt 2006/47**

(51) Int Cl.:
*C08G 77/06* (2006.01)    *C08L 83/04* (2006.01)

(21) Anmeldenummer: **03013381.3**

(22) Anmeldetag: **18.06.2003**

(54) **Verfahren zur kontinuierlichen Herstellung von aus zwei Komponenten bestehenden additionsvernetzenden Siliconmassen**

Process for the continuous production of addition curable two part silicones

Procédé pour la production en continu de pates de silicone réticulable par addition, à base de deux composants

(84) Benannte Vertragsstaaten:
**BE DE FR GB NL**

(30) Priorität: **27.06.2002 DE 10228842**

(43) Veröffentlichungstag der Anmeldung:
**02.01.2004 Patentblatt 2004/01**

(73) Patentinhaber: **Wacker Chemie AG
81737 München (DE)**

(72) Erfinder:
• **Hierstetter, Thomas, Dr.
84489 Burghausen (DE)**
• **Schuster, Johann, Dr.
84547 Emmerting (DE)**
• **Skroch, Gerhard
5280 Braunau (AT)**
• **Wöhrl, Helmut
84503 Altötting (DE)**

(74) Vertreter: **Gössmann, Christoph Tassilo et al
Wacker-Chemie GmbH,
Zentralbereich PML,
Hanns-Seidel-Platz 4
81737 München (DE)**

(56) Entgegenhaltungen:
EP-A- 0 568 891     US-B1- 6 218 495
US-B1- 6 313 217

**Beschreibung**

Gegenstand der Erfindung ist ein Verfahren zur kontinuierlichen Herstellung von additionsvernetzenden Flüssigsiliconkautschuken.

In EP 0568891 A1 (DE 4215205) wird ein Verfahren zur kontinuierlichen Herstellung von Flüssigsiliconkautschuken beschrieben. Aufgabe war es, ein Verfahren zur vollständigen kontinuierlichen Compoundierung von vernetzungsfähigen Siliconkautschuken, insbesondere zur parallelen Herstellung beider Komponenten von Flüssigsiliconkautschuken, zur Verfügung zu stellen, wobei die angegebenen Polymere durchaus auch den Bereich des HTVs betreffen.

Beansprucht wird dort ein mehrstufiges Verfahren mit einer Hydrophobierungsreaktion in den ersten drei Stufen (z.B. mit HMN) und anschließender Aufteilung des Materials in einen A- und B-Strom mit Zumischung der notwendigen Additive in Kleinmengen über (kühlbare) Statik-Mischer.

Dieses Verfahrensprinzip ist schwer durchführbar, da Sicherheitsaspekte wie die Entfernung von Sauerstoff (→ Explosionsgefahr) aus der zu dosierenden Kieselsäure, die Reaktionsführung mit Rückführung des Beladungsmittels sowie die Entgasung und Temperaturkontrolle (wichtig für Zumischung temperatursensitiver Additive im A/B-Strom) schwer handzuhaben sind.

Als Folge treten sehr lange Verweilzeiten und damit Totzeiten auf, in denen der Prozess nicht gesteuert werden kann.

Die Einmischung von Additiven zur A- und B-Komponente über kühlbare Statik- Mischer ist in ihrer Effizienz unsicher, sowohl in bezug auf Temperatursenkung und vor allem Mischgüte.

Kleinstmengen, die materialbestimmend sind, homogen über Statikmischer einzubringen, ist entweder sehr aufwendig oder prozessunsicher.

In DE 198 09 548 A1 wird ein Verfahren zur kontinuierlichen Herstellung von mit Feuchtigkeit vernetzbaren Organopolysiloxanmassen beschrieben. Aufgabe war es, ein Verfahren zur kontinuierlichen Herstellung von RTV-1-Massen bereitzustellen, bei dem eine Rezepturänderung (z.B. Farbe) möglichst geringe Verluste an Zeit und RTV-1 Masse bedingt. Beansprucht wird dort ein dreistufiges Verfahren, bei dem zuerst eine Rohmischung aus $\alpha$, $\omega$-Dihydroxypolydiorganosiloxanen und hydrophilem Füllstoff hergestellt wird und diese nach Entgasung mit Additiven wie Vernetzer und Kondensationskatalysator über einen Dynamikmischer versetzt wird. Die Reinigung dieses Mischers erzeugt wegen des kleinen Volumens nur wenig Zeit- und Materialverlust bei Produktwechsel.

Diese Druckschrift betrifft RTV-1-Massen mit relativ wenigen Einsatzstoffen, deren (Gewichts-)Schwankungen nicht so stark zum Tragen kommen, wie dies bei additionsvernetzenden Systemen der Fall ist. Hauptaugenmerk ist die Minimierung von Verlusten, gerade bei Produktwechsel.

Aufgabe der Erfindung ist es, die Nachteile des Standes der Technik zu überwinden.

Gegenstand der Erfindung ist ein Verfahren zur kontinuierlichen Herstellung von additionsvernetzenden Siliconkautschuken auf der Basis von zumindest einem Polyvinylpolysiloxan mit hydrophobiertem Füllstoff in einer Menge von zumindest 10 Gew.% bezogen auf den Siliconflüssigkautschuk, dadurch gekennzeichnet, dass die Grundmasse aus Polyvinylpolysiloxan und Füllstoff aus einem Behälter, dessen Volumen sich proportional mit der Entnahme verringert (2), entnommen wird und über eine Pumpe (4a) mit Überdruck an zwei weitere Pumpen (4) gefördert wird, die diese Grundmasse weiterfördern, damit einmal kontinuierlich A hergestellt wird, indem zur Grundmasse zumindest ein Metallkatalysator zugemischt wird und zum anderen gleichzeitig kontinuierlich B hergestellt wird, indem zur Grundmasse aus Polyvinylpolysiloxan und Füllstoff der Vernetzer und Inhibitor zugemischt werden, wobei der Metallkatalysator, Vernetzer und Inhibitor über eine Zudosiereinheit dosiert werden, die die jeweiligen Stoffe zudosieren, wobei die Mischung der Additive mittels eines Dynamikmischers erfolgt.

Die Grundmasse wird bevorzugt nach dem folgenden Verfahren nach EP 807 505 zur Herstellung von Organopolysiloxanzusammensetzungen hergestellt, bei dem

(1) Organopolysiloxane, die durchschnittlich mindestens 2 an Silicium gebundene Reste pro Molekül aufweisen, die ausgewählt werden aus

(a) Kohlenwasserstoffresten mit aliphatischen Kohlenstoff-Kohlenstoff-Mehrfachbindungen
(b) Wasserstoffatomen und
(c) Hydroxylgruppen und

(2) vorhydrophobierte oxidische verstärkende Füllstoffe mit einem durch die Hydrophobierung erhaltenen Kohlenstoffgehalt von mindestens 0,5 Gew.-% in einer Knetmaschine mit wenigstens zwei in Reihe nebeneinander angeordneten Knetkammern, die jeweils zwei achsparallele, gleich- oder gegensinnig antreibbare Knetwerkzeuge enthalten und die durch quer zu den Achsen der Knetwerkzeuge passierbare Öffnungen miteinander verbunden sind, wobei die erste Knetkammer eine Beschickungsöffnung und die letzte Knetkammer eine Austragsöffnung aufweisen, vermischt und geknetet werden.

Als Organopolysiloxane (1) werden vorzugsweise lineare oder verzweigte Organopolysiloxane aus Einheiten der allgemeinen Formel I

$$R^1{}_a R^2{}_b SiO_{\frac{4-a-b}{2}} \qquad (I),$$

eingesetzt, wobei

$R^1$    einwertige, gegebenenfalls mit Halogenatomen substituierte $C_1$- bis $C_{10}$-Kohlenwasserstoffreste, die frei sind von aliphatischen Kohlenstoff-Kohlenstoff-Mehrfachbindungen,

$R^2$    Wasserstoffatome, Hydroxylgruppen oder einwertige Kohlenwasserstoffreste mit aliphatischer Kohlenstoff-Kohlenstoff-Mehrfachbindung mit 2 bis 8 Kohlenstoffatomen je Rest,

**a**    die Werte 0, 1, 2 oder 3 und

**b**    die Werte 0, 1 oder 2 bedeuten,

mit der Maßgabe, daß durchschnittlich mindestens 2 Reste $R^2$ je Molekül vorliegen.

Die Organopolysiloxane (1) besitzen vorzugsweise eine durchschnittliche Viskosität von mindestens 10, insbesondere mindestens 1000 mPa·s, und vorzugsweise höchstens $10^8$, insbesondere höchstens $10^5$ mPa·s bei 25°C.

Beispiele für unsubstituierte Kohlenwasserstoffreste $R^1$ sind $C_1$- bis $C_{10}$-Alkyl-, $C_1$- bis $C_{10}$-Alkaryl oder $C_1$- bis $C_{10}$-Aralkylreste deren Alkylteil gesättigt ist, oder $C_1$- bis $C_{10}$-Arylreste. Beispiele für Alkylreste $R^1$ sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Cycloalkylreste, wie der Cyclohexylrest; Beispiele für Alkarylreste $R^1$ sind der α- und β- Phenylethylrest; Beispiele für Aralkylreste $R^1$ sind der Benzylrest und der 2,4-Diethylbenzylrest; Beispiele für Arylreste $R^1$ sind der Phenylrest und der Naphthylrest.

Vorzugsweise bedeutet $R^1$ $C_1$- bis $C_6$-Alkylreste und Phenylreste, insbesondere Methyl- und Ethylreste.

Beispiele für mit Halogenatomen substituierte Kohlenwasserstoffreste $R^1$ sind der 3,3,3-Trifluor-n-propylrest, der 2,2,2,2',2',2'-Hexafluorisopropylrest, der Heptafluorisopropylrest, der 3-Chlor-n-propylrest, der 2-Ethylbromidrest und der 3-Propylbromidrest. Vorzugsweise sind die Reste $R^1$ nicht substituiert.

Beispiele für einwertige Kohlenwasserstoffreste mit aliphatischer Kohlenstoff-Kohlenstoff-Mehrfachbindung mit 2 bis 8 Kohlenstoffatomen je Rest $R^2$ sind Alkenylreste, wie der Vinyl-, 5-Hexenyl-, 1-Propenyl-, Allyl-, 1-Butenyl- und 1-Pentenylrest; und Alkinylreste, wie der Ethinyl-, Propargyl- und 1-Propinylrest.

Vorzugsweise weisen die Organopolysiloxane (1) mindestens 90, insbesondere mindestens 95, Mol-% Einheiten der allgemeinen Formel I auf, in denen die Summe a+b = 2 beträgt.

Vorzugsweise weisen die Organopolysiloxane (1) mindestens 60, insbesondere mindestens 80, speziell mindestens 95, Mol-% Einheiten der allgemeinen Formel I auf, in denen b den Wert 0 hat.

Vorzugsweise werden auf 100 Gewichtsteile der Organopolysiloxane (1) mindestens 5, vorzugsweise mindestens 10, insbesondere mindestens 20, Gewichtsteile und höchstens 200, vorzugsweise höchstens 150, insbesondere höchstens 100, Gewichtsteile vorhydrophobierte oxidische verstärkende Füllstoffe (2) eingesetzt.

Die Füllstoffe (2) sind vorzugsweise jeweils vorhydrophobierte pulverförmige Füllstoffe, wie pyrogen hergestellte Kieselsäure, gefällte Kieselsäure und Silicium-Aluminium-Mischoxide oder faserförmige Füllstoffe, wie Asbest. Es kann eine Art von Füllstoff, es kann auch ein Gemisch von mindestens zwei Füllstoffen eingesetzt werden.

Der durch die Hydrophobierung erhaltene Kohlenstoffgehalt der Füllstoffe (2) beträgt vorzugsweise mindestens 1 Gew.-% und vorzugsweise höchstens 6 Gew.-%. Bei der Bestimmung des Kohlenstoffgehalts der Füllstoffe (2) wird durch eine Trocknung von mindestens 2 Stunden bei mindestens 200°C sichergestellt, daß der gemessene Kohlenstoffgehalt sich auf die hydrophobierende Schicht der Füllstoffe (2) bezieht.

Besonders bevorzugt als verstärkende Füllstoffe (2) sind pyrogen hergestellte Kieselsäure und gefällte Kieselsäure. Vorzugsweise beträgt die BET-Oberfläche der Füllstoffe (2) mindestens 50 m$^2$/g, insbesondere mindestens 100 m$^2$/g, speziell mindestens 150 m$^2$/g.

Die Füllstoffe (2) sind durch die Behandlung mit beispielsweise Organosilanen, -silazanen bzw. -siloxanen oder durch Verätherung von Hydroxylgruppen zu Alkoxygruppen hydrophobiert. Ein bevorzugtes Verfahren zur Hydrophobierung ist in US-A-5,057,151 beschrieben.

Die Organopolysiloxane (1a), die Kohlenwasserstoffreste mit aliphatischen Kohlenstoff-Kohlenstoff-Mehrfachbindungen besitzen, weisen vorzugsweise durchschnittlich 2 bis 10, insbesondere 2 bis 4, aliphatische Kohlenstoff-Kohlenstoff-Mehrfachbindungen pro Molekül auf. Vorzugsweise weisen die endständigen Einheiten der allgemeinen Formel I aliphatische Kohlenstoff-Kohlenstoff-Mehrfachbindungen auf. Vorzugsweise sind die aliphatischen Kohlenstoff-Kohlenstoff-Mehrfachbindungen Doppelbindungen. Die Organopolysiloxane (1a) besitzen vorzugsweise eine durchschnittliche Viskosität von mindestens 100, insbesondere mindestens 1000, mPa·s und vorzugsweise höchstens $10^5$, insbesondere höchstens 5 x $10^4$, mPa·s bei 25°C.

Die Organopolysiloxane (1b) mit Si-gebundenen Wasserstoffatomen weisen vorzugsweise durchschnittlich 2 bis 50, insbesondere 5 bis 20, Si-gebundene Wasserstoffatome pro Molekül auf. Die Organopolysiloxane (1b) besitzen vorzugsweise eine durchschnittliche Viskosität von mindestens 10, insbesondere mindestens 30, mpa·s und vorzugsweise höchstens $10^6$, insbesondere höchstens 10000, mPa·s bei 25°C.

Die Organopolysiloxane (1c), die Si-gebundene Hydroxylgruppen aufweisen, besitzen vorzugsweise 2 bis 4 Hydroxylgruppen pro Molekül. Vorzugsweise besitzen sie endständige Hydroxylgruppen. Die Organopolysiloxane (1c) besitzen vorzugsweise eine durchschnittliche Viskosität von mindestens 10, insbesondere mindestens 1000, mPa·s und vorzugsweise höchstens $10^8$, insbesondere höchstens 5 x $10^6$, mPa·s bei 25°C.

Die mittlere Verweilzeit der Zusammensetzung in der Knetmaschine beträgt vorzugsweise höchstens eine Stunde, insbesondere höchstens 30 min.

Wenn erfindungsgemäß eine Knetmaschine mit 100 1 Nettovolumen benutzt wird, können problemlos bei einer mittleren Verweilzeit von 15 bis 20 min 200 kg/h Organopolysiloxanzusammensetzung hergestellt werden, d.h. ca. 4000 kg/d.

Vergleichbare 3000 kg lagerstabile Organopolysiloxanzusammensetzungen werden erhalten, wenn in einem diskontinuierlich arbeitenden Kippkneter mit 4000 1 Nettovolumen bei einer mittleren Verweilzeit von 20 h gearbeitet wird. Beim Kippkneter muß zusätzlich Zeit für die Entleerung und gegebenenfalls Reinigung dazugerechnet werden.

Die Organopolysiloxanzusammensetzungen, welche vorhydrophobierte oxidische verstärkende Füllstoffe (2) enthalten, weisen eine besonders gute Lagerstabilität auf, wenn in einem ersten Schritt nur ein Teil der Organopolysiloxane (1) mit den Füllstoffen (2) vermischt wird, die Mischung in einem zweiten Schritt bei einer Temperatur von vorzugsweise höchstens 130°C geknetet wird, bis die Viskosität der Mischung einen konstanten Wert erreicht hat und in einem dritten Schritt die Mischung mit dem Rest der Organopolysiloxane (1) vermischt wird. Vorzugsweise werden im ersten Schritt 30 bis 80 Gew.-% der Organopolysiloxane (1) eingesetzt.

Die in drei Schritte aufgegliederte Verfahrensvariante kann in einer Knetmaschine durchgeführt werden, die wenigstens drei Knetkammern aufweist, wobei die für den dritten Schritt eingesetzten Knetkammern mindestens eine zusätzliche Beschickungsöffnung besitzen.

Vorzugsweise wird der Rest der Organopolysiloxane (1) im dritten Schritt in mindestens zwei, insbesondere mindestens drei, Knetkammern zugegeben, wobei vorzugsweise in der ersten Knetkammer des dritten Schritts weniger Organopolysiloxane (1) als in den weiteren Knetkammern zugesetzt wird. Bei der Zugabe der Organopolysiloxane (1) im dritten Schritt in mehrere Knetkammern wird eine besonders homogene Organopolysiloxanzusammensetzung erhalten.

Die erfindungsgemäß eingesetzte Knetmaschine erlaubt eine Steuerung der Intensität des Knetprozesses und der Verweilzeit, weil Drehzahl und Drehrichtung der Knetwerkzeuge in den einzelnen Knetkammern unnabhängig voneinander beliebig einstellbar sind. Beispielsweise können die Drehzahlen bei der Versuchsanlage 1 bis 400 UpM betragen. Bei geeigneter Wahl der Misch- und Knetwerkzeuge sind auch noch höhere Drehzahlen möglich.

Bei der in drei Schritte aufgegliederten Verfahrensvariante können die Knetwerkzeuge der Knetkammern im ersten und im zweiten Schritt mit niedrigeren Drehzahlen als im dritten Schritt betrieben werden. Beispielsweise sind die Drehzahlen im dritten Schritt zwei- bis fünfmal so hoch als im ersten und zweiten Schritt. Wenn der erste Schritt in mehreren *Knetkammern* ausgeübt wird, können vorzugsweise in einer der Knetkammern die Knetwerkzeuge in Gegenrichtung betrieben werden. Dadurch wird der Füllgrad der Knetmaschine und damit die Verweilzeit verbessert.

Da in der Knetmaschine kein freier Gasraum vorhanden ist, kann auf Schutzgas verzichtet werden.

Der Produktaustrag aus der Knetmaschine stellt kein Problem dar, weil die fertigen Zusammensetzungen durch die Knetwerkzeuge leicht zur Austragsöffnung befördert werden können. Die letzte Knetkammer weist vorzugsweise Pumpflügel für den Produktaustrag auf.

Vorzugsweise weist die Knetmaschine mindestens drei, insbesondere mindestens fünf, Knetkammern auf.

Zwischen einzelnen oder allen Knetkammern können Siebe, Stauscheiben oder Schieber zur Stauung der Organopolysiloxanzusammensetzungen angebracht sein. Diese Elemente können hinsichtlich ihrer Lage und der von ihnen freigebbaren Durchlassöffnung verstellbar sein. Dadurch lässt sich die Verweilzeit in den einzelnen Kammern beeinflussen.

Vorzugsweise sind die Knetwerkzeuge Knetschaufeln, Walzen oder Polygonscheiben.

Vorzugsweise sind in der Knetmaschine neben der Beschickungsöffnung der ersten Knetkammer weitere Beschickungsöffnungen vorhanden, die in die einzelnen Knetkammern führen oder zwischen zwei Knetkammern angeordnet sind. Vorzugsweise weist jede Knetkammer eine Beschickungsöffnung auf. Insbesondere ist die Beschickungsöffnung der ersten Knetkammer für die Beschickung mit Feststoff geeignet und die anderen Beschickungsöffnungen für die Zudosierung von Flüssigkeiten vorgesehen. Vorzugsweise verfügt jede Knetkammer über einen separat regelbaren Antrieb, der jeweils vorzugsweise eine Drehmomentmessung aufweist. Das Drehmoment ist ein Maß für die Viskosität der Mischung in der Kammer.

Vorzugsweise sind die Knetkammern beheizbar oder kühlbar, insbesondere einzeln bei unterschiedlicher Temperatur betreibbar. Beim Kneten entsteht Friktionswärme, die vorzugsweise durch Kühlen teilweise abgeführt wird, um Überhitzung der Zusammensetzung zu vermeiden. Vorzugsweise beträgt die Temperatur beim Kneten, insbesondere bei der in drei Schritte aufgegliederten Verfahrensvariante im zweiten Schritt höchstens 200°C.

Vorzugsweise sind die Knetwerkzeuge fliegend gelagert. Die lagerseitige Gehäuse-Abschlußwandung ist dann mit Öffnungen für die Antriebswellen der Knetwerkzeuge versehen. Vorzugsweise hat das Gehäuse der Knetkammern eine quer zu den Werkzeugachsen verlaufende Trennstelle, so daß der der Lagerung abgewandte Gehäuseteil in axialer Richtung der Antriebswellen von der Trennstelle und den Knetwerkzeugen wegbewegbar ist. Eine derartig ausgestaltete Knetmaschine ist besonders leicht zu reinigen.

Eine solche Knetmaschine ist in der DE-C-40 05 823 beschrieben.

Bevorzugte erfindungsgemäße Polyvinylsiloxane sind lineare oder verzweigte Polyvinylsiloxane und weisen durchschnittlich 2 bis 20, insbesondere 2 bis 4, aliphatische Kohlenstoff-Kohlenstoff-Mehrfachbindungen pro Molekül auf. Substituenten am Polyvinylsiloxan können neben Alkylresten mit 1 bis 8 Kohlenstoffatomen auch Arylreste und/ oder Fluoralkylreste sein. Vorzugsweise sind die aliphatischen Kohlenstoff-Kohlenstoff-Mehrfachbindungen Doppelbindungen. Die durchschnittliche Viskosität liegt vorzugsweise bei mindestens 100, insbesondere 1000, mPa*s und vorzugsweise höchstens 10000000 mPa*s, insbesondere höchstens 500000 mPa*s.

Als Füllstoffe sind bevorzugt verstärkende Füllstoffe, wie pyrogen hergestellte Kieselsäure und gefällte Kieselsäure. Besonders bevorzugt sind verstärkende Füllstoffe, die durch eine Vorhydrophobierung(analog Patent EP 0378785 B1), z.B. mit Organosilanen, hergestellt werden und eine bevorzugte BET-Oberfläche vom mindestens 50 $m^2$/g, insbesondere mindestens 100 $m^2$/g, besonders bevorzugt von mindestens 150 $m^2$/g, haben.

Die Menge des Füllstoffs kann 10 bis 60% der Gesamtmischung ausmachen, wobei bevorzugt 15 bis 45% und besonders bevorzugt 20 bis 40% sind.

Das Verfahren zur Vorhydrophobierung nach EP-0378785 B1 wird unter gleichzeitiger mechanischer Beanspruchung des Reaktionsgemisches vorzugsweise in einem Mischorgan bei Drehzahlen von vorzugsweise 300 bis 2000 Umdrehungen pro Minute, insbesondere 300 bis 1500 Umdrehungen pro Minute, durchgeführt.

Beispiele für Mischorgane sind Turrax, Dissolver, Henschelmischer und Mischturbine.

Das Verfahren wird vorzugsweise in inerter Atmosphäre durchgeführt, wobei der Gehalt an Sauerstoff auf zumindest 3 Vol% reduziert ist. Vorzugsweise wird in Stickstoff- oder Argonatmosphäre gearbeitet.

Nach beendeter Hydrophobierung wird das überschüssige Hydrophobierungsmittel entfernt und vorzugsweise beim nächsten Ansatz erneut eingesetzt. Abreagiertes Hydrophobierungsmittel sowie Verluste werden ersetzt.

Durch Variation der Drehzahl des Mischorgans oder der Verweilzeit lässt sich der Hydrophobierungsgrad des erhaltenen, hydrophoben, teilchenförmigen Feststoffes leicht variieren. Bevorzugte Verweilzeiten sind 10 bis 1800 Sekunden.

Das Verfahren lässt sich sowohl kontinuierlich als auch diskontinuierlich durchführen.

Es werden 5 bis 50 Gew.-%, vorzugsweise 20 bis 30 Gew.-%, des Si-OH-Gruppen enthaltenden, teilchenförmigen Feststoffes, bezogen auf das Gesamtgewicht der Reaktionsmischung, bestehend aus teilchenförmigem Feststoff und Hydrophobierungsmittel, eingesetzt. Die Mengenverhältnisse sind beim erfindungsgemäßen Verfahren jedoch immer derart gestaltet, dass das Reaktionsgemisch, bestehend aus teilchenförmigem Feststoff und Hydrophobierungsmittel, eine pastöse Konsistenz aufweist.

Durch diese pastöse Konsistenz gelingt es, das Reaktionsgemisch auch bei geringen Drehzahlen des Mischorgans hohen Scherkräften auszusetzen.

Diese hohen Scherkräfte führen zu hoher mechanischer Beanspruchung des Reaktionsgemisches, wodurch Agglomerate des teilchenförmigen Feststoffes zerkleinert werden, was wiederum eine Erhöhung der Hydrophobierung bedingt.

Der Si-OH-Gruppen enthaltende, teilchenförmige Feststoff weist vorzugsweise eine Oberfläche von 5 $m^2$/g bis 600 $m^2$/g, insbesondere 150 $m^2$/g bis 300 $m^2$/g, nach BET auf. Beispiele für teilchenförmigen Feststoff sind Quarzmehle, Diatomeenerde und Tonminerale.

Vorzugsweise wird pyrogen erzeugtes oder gefälltes Siliciumdioxyd verwendet.

Als Hydrophobierungsmittel auf Basis von Organosiliciumverbindungen können im Rahmen der Erfindung die gleichen verwendet werden, die bisher zur Hydrophobierung von Si-OH-Gruppen enthaltendem, teilchenförmigem Feststoff verwendet wurden.

Diese Hydrophobierungsmittel enthalten 1 bis 5 Gew.-% Wasser, bezogen auf das Gesamtgewicht des Hydrophobierungsmittels.

Zusammen mit Wasser, können, falls gewünscht, an sich bekannte, die Umsetzung von Si-OH-Gruppen enthaltendem, feinteiligem Feststoff mit Organosiliciumverbindungen fördernde Katalysatoren, wie Chlorwasserstoff, Amine, z.B. n-Butylamin und/oder Metallverbindungen, z.B. Titantetrachlorid oder Dibutylzinndilaurat, mitverwendet werden.

Bevorzugte Organosiliciumverbindungen für Hydrophobierungsmittel sind solche der allgemeinen Formel

$$(R_3Si)_aZ,$$

worin R gleiche oder verschiedene, einwertige, gegebenenfalls substituierte Kohlenwasserstoffreste bedeutet, Z Halogen, Wasserstoff oder ein Rest der Formel -OH, -OR',-NR'X, -ONR'$_2$, -OOCR', -O- oder -N(X)-, wobei R' meist ein Alkylrest mit 1 bis 4 Kohlenstoffatomen ist und X Wasserstoff ist oder die gleiche Bedeutung wie R' hat, und a 1 oder 2 ist. Das bei weitem wichtigste Beispiel für einen Kohlenwasserstoffrest R ist der Methylrest. Weitere Beispiele für Kohlenwasserstoffreste R sind Octadecylreste, der Phenylsowie der Vinylrest.

Beispiele für substituierte Kohlenwasserstoffreste R sind insbesondere halogenierte Kohlenwasserstoffreste wie der 3,3,3-Trifluorpropylrest.

Beispiele für Reste R' sind der Methyl- , Ethyl- und Propylrest.

Beispiele für Organosiliciumverbindungen der oben angegebenen Formel sind Hexamethyldisilazan, Trimethylsilanol, Trimethylchlorsilan, Trimethylethoxysilan, Triorganosilyloxyacylate, wie Vinyldimethylacetoxysilan, Triorganosilylamine, wie Trimethylsilylisopropylamin, Trimethylsilylethylamin, Dimethylphenylsilylpropylamin und Vinyldimethylsilylbutylamin, Triorganosilylaminooxyverbindungen, wie Diethylaminooxytrimethylsilan und Diethylaminooxydimethylphenylsilan, ferner Hexamethyldisiloxan, 1,3-Divinyltetramethyldisiloxan, 1,3-Diphenyltetramethyldisiloxan und 1,3-Diphenyltetramethyldisilazan.

Weitere Beispiele für Organosiliciumverbindungen sind Dimethyldichlorsilan, Dimethyldiethoxysilan, Dimethyldimethoxysilan, Diphenyldiethoxysilan, Vinylmethyldimethoxysilan, Methyltriethoxysilan, Octamethylcyclotetrasiloxan und/oder in den endständigen Einheiten je eine Si-gebundene Hydroxylgruppe enthaltende Dimethylpolysiloxane mit 2 bis 12 Siloxaneinheiten je Molekül.

Es können auch Gemische aus verschiedenen Organosiliciumverbindungen mit dem teilchenförmigen, Si-OH-Gruppen enthaltenden Feststoff umgesetzt werden.

Besonders gute Ergebnisse werden erreicht, wenn man Hydrophobierungsmittel verwendet, die aus

70 bis 89 Gew.-% Hexamethyldisiloxan und/oder Trimethylsilanol,

10 bis 30 Gew.-% Hexamethyldisilazan und/oder Divinyltetramethyldisilazan und

1 bis 5 Gew.-% Wasser bestehen.

Die Angaben in Gew.-% beziehen sich hierbei auf das Gesamtgewicht des Hydrophobierungsmittels.

Die genannten Mischorgane sind meist weder mit Einrichtungen zum Heizen noch mit Einrichtungen zum Erstellen des Drucks, der von der umgebenden Atmosphäre abweicht, ausgestattet. Die Hydrophobierung wird daher vorzugsweise ohne zusätzliche Erwärmung und beim Druck der umgebenden Atmosphäre, also 1080 hPa(abs.) oder ungefähr 1080 hPa(abs.), durchgeführt. Falls möglich und erwünscht können jedoch auch andere Temperaturen bis zum Siedepunkt des Hydrophobierungsmittels und/oder andere Drücke im Bereich von vorzugsweise 1000 bis 10000 hPa(abs.) bei der Hydrophobierung angewandt werden.

Der durch das Verfahren erhaltene, hydrophobe, teilchenförmige Feststoff fällt ohne zusätzlichen Verdichtungsschritt mit hohem Schüttgewicht an, was für die Weiterverarbeitung von Vorteil ist. Das gegenüber dem Ausgangsmaterial höhere Schüttgewicht resultiert aus der Zerstörung von voluminösen Agglomeraten.

Inhibitoren sind an sich bekannt. Beispiele hierfür sind acetylenisch ungesättigte Alkohole, wie 3-Methyl-1-butin-3-ol, 1-Ethinylcyclohexan-1-ol, 3,5-Dimethyl-1-hexin-3-ol und 3-Methyl-1-pentin-3-ol. Beispiele für Inhibitoren auf Vinylsiloxanbasis sind 1,1,3,3-Tetramethyl-1,3-divinylsiloxan und vinylgruppenhaltige Poly-, Oligo- und Disiloxane.

Als Übergangsmetallkatalysatoren werden vorzugsweise Platinmetalle und/oder deren Verbindungen eingesetzt, vorzugsweise Platin und/oder dessen Verbindungen. Beispiele für solche Katalysatoren sind metallisches und fein verteiltes Platin, das sich auf Trägern, wie Siliziumdioxid, Aluminiumoxid oder Aktivkohle befinden kann, Verbindungen oder Komplexe von Platin, wie Platinhalogenide, z.B. PtCl$_4$, H$_2$PtCl$_6$*6H$_2$O, Na$_2$PtCl$_4$*4H$_2$O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H$_2$PtCl$_6$*6H$_2$O und Cyclohexanon, Platin-Vinylsiloxankomplexe, insbesondere Platin-Divinyltetramethyldisiloxankomplexe mit oder ohne Gehalt an nachweisbarem anorganisch gebundenen Halogen, Bis-(gammapicolin)-platindichlorid sowie Umsetzungsprodukte von Platintetrachlorid mit Olefin und primärem Amin oder sekundärem Amin oder primärem Amin und sekundärem Amin, wie das Umsetzungsprodukt aus in 1-Octen gelöstem Platintetrachlorid mit sec.-Butylamin, oder Ammonium-Platinkomplexe, Platinkatalysatoren für 1-K-Systeme, wie microverkapselte Platinkomplexe oder z.B. Platin-Acetylid-Komplexe.

Der Übergangsmetallkatalysator wird vorzugsweise in Mengen 0,5 bis 500 Gewichts-ppm (Gewichtsanteile je Million Gewichtsteilen), insbesondere 2 bis 400 Gewichts-ppm, jeweils berechnet als elementares Übergangsmetall und bezogen auf das Gesamtgewicht der A- und B-Komponente eingesetzt.

Als Vernetzer werden Organopolysiloxane mit Si-gebundenen Wasserstoffatomen vorzugsweise mit durchschnittlich 2 bis 200, besonders bevorzugt mit 5 bis 70, Si-gebundenen Wasserstoffatomen pro Molekül eingesetzt. Diese Vernetzer besitzen eine Viskosität von durchschnittlich 10, insbesondere mindestens 30, mPa*s und vorzugsweise höchstens 10000, insbesondere höchstens 1000, mPa*s bei 25°C.

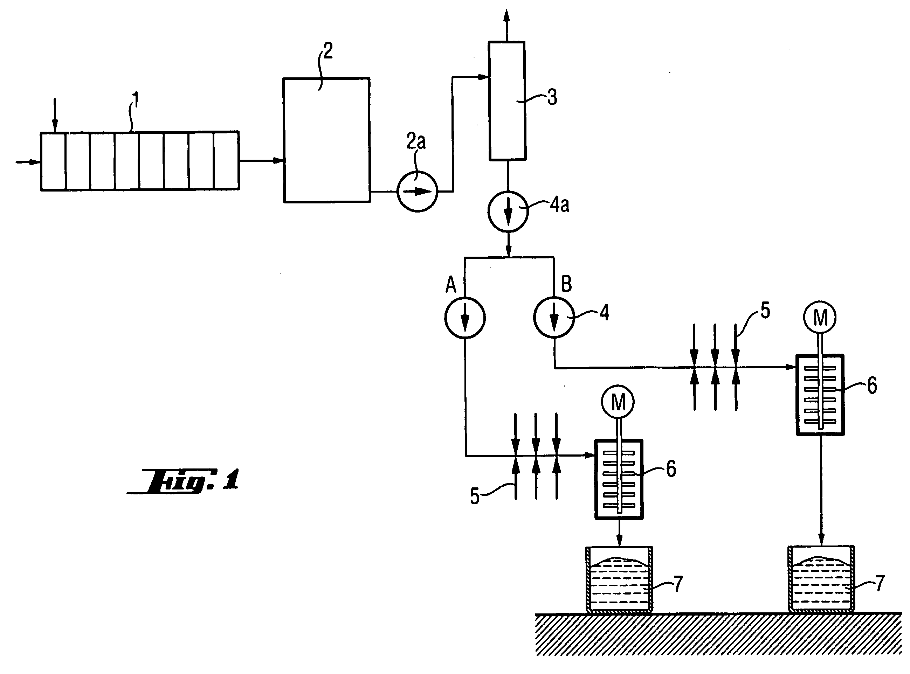

Ausgehend von der bestehenden kontinuierlich produzierenden Grundmassenanlage (1) in Fig.1 zur Erzeugung von vorhydrophobierter Kieselsäure und Vinylorganopolysiloxane enthaltenden Grundmassen wird der Materialstrom zunächst über einen Behälter (2), dessen Volumen sich proportional mit der Entnahme verringert und der als Puffer dient, geführt, und der durch sein Speichervolumen ein Absinken der Temperatur erlaubt. Der Behälter ist vorzugsweise derart aufgebaut, dass er aus einem Kevlargewebe besteht, das mit einem Silicon beschichtet ist. Der Behälter ist vorzugsweise als Faltbehälter gemäß DE 4242833 ausgelegt und läuft an seinen vier Ecken mit Rollen in einer Führungsschiene, um sich so möglichst sauber bei der Entnahme zusammenzufalten. Die Befüllung dieses Behälters erfolgt vorzugsweise von der Mitte unten. Entleert wird er seitlich durch eine Pumpe 2a, vorzugsweise eine Zahnradpumpe, welche abgedichtet ist und keine Falschluft ziehen kann, so dass im Behälter ein Unterdruck aufgebaut werden kann und der Behälter über den Umgebungsdruck, der auf dem Behälter lastet, entleerbar ist. Dieser Behälter dient gleichzeitig als Puffer, um die gleichmäßige Beschickung der Anlage zu gewährleisten. Danach wird der Produktstrom über eine Entgasungsanlage (3) geführt, die Gaseinschlüsse durch Verwendung von Vakuum entfernt. Bei Bedarf können an beliebigen Stellen zwischen den Positionen geeignete Kühler eingebaut werden.

Vor der Aufteilung des Materialstromes in einen A- und B-Strom wird der Druck mittels der Pumpe 4a erhöht und anschließend den, den jeweiligen Materialströmen zugeordneten regelbaren Dosierpumpen 4 vorgelegt, welche das Material bei einem Temperaturniveau von 20°C - 200°C, bevorzugt 20°C - 100°C, den entsprechenden kühlbaren Dynamikmischern 6 in einem jeweils definierten Strom zuführen. An den Dosierpumpen (4) wird der Volumenstrom gemessen, um die Additive im richtigen Verhältnis zuzudosieren. Alternativ für die Dosierpumpen (4) könnten auch Portionierzylinder verwendet werden, die aber keinen konstanten Fluss ermöglichen. Am Eingang der Dynamikmischer, die vorzugsweise Kreuzbalken mit Planetenbewegung aufweisen, werden die zur Fertigcompoundierung notwendigen Additive, wie Inhibitor, Vernetzer (Si-H-haltig), Katalysator (z.B. Pthaltig), Vinylorganopolysiloxane oder sonstige Additive an den Einspeisstellen 5 zugegeben bzw. zugemischt, wobei gegebenenfalls auch mehrere Dynamikmischer hintereinander geschaltet sein können, um eine chemisch sinnvolle Abfolge der Dosierungen zu ermöglichen. Alle Stoffe werden in flüssiger bis pastöser Form eingemischt. Kleinstmengen werden über eine extrem elaborierte Waagen- und Dosiertechnik mit engsten Toleranzen kontinuierlich eingebracht. Dies erfolgt, indem die Additive vorzugsweise über Differentialdosierwagen gewogen werden (eine Dosierung über das Volumen ist auch möglich) und diese Präzisionsförderpumpen steuern, die mit einer Genauigkeit von vorzugsweise $\pm 5$ Gew.% bezogen auf das jeweilige zu dosierende Gewicht je Komponente arbeiten, wobei dies in einem Zeitintervall von 3 min erfolgt, wobei dies auch bei einer Langzeitbetrachtung von 1h gilt, bevorzugt mit einer Genauigkeit von vorzugsweise $\pm 2$ Gew.% bezogen auf das jeweilige zu dosierende Gewicht je Komponente arbeiten, wobei dies in einem Zeitintervall von 2 min erfolgt, wobei dies auch bei einer Langzeitbetrachtung von 1h gilt, besonders bevorzugt mit einer Genauigkeit von vorzugsweise $\pm 1$ Gew.% bezogen auf das jeweilige zu dosierende Gewicht je Komponente arbeiten, wobei dies in einem Zeitintervall von 1 min erfolgt, wobei dies auch bei einer Langzeitbetrachtung von 1h gilt. Bei den Präzisionsförderpumpen handelt es sich vorzugsweise um Zahnradpumpen, wobei auch Kolbenpumpen verwendet werden.

Auch das Einmischen von Pigmentpaste ist denkbar.

Die Dynamikmischer erlauben eine homogen, schlierenfreie Darstellung der A- und B-Komponenten bei geringem Druckverlust und geringer Erwärmung des Materials, was z.B. für den Katalysator bedeutend ist. Weiterhin können Materialströme mit einer Viskosität von 100 mPa*s bis 10 Mio. mPas (D=0,89 s$^{-1}$) mit diesen Aggregaten verarbeitet werden.

Über online-Viskosimeter kann die Zielviskosität der A- und B-Komponenten kontrolliert werden und eine Regelung des Prozesses stattfinden. Die vorzugsweise gekühlten Dynamikmischer können den Materialstrom von ca. 80°C auf 50 °C abkühlen.

Nach Austritt aus den Dynamikmischern werden die fertig compoundierten A- und B-Komponenten in die Zielgebinde (7) abgefüllt.

**Beispiele**

Im folgenden werden Beispiele zur Herstellung von Flüssigsiliconkautschuken nach dem neuen erfindungsgemäßen Verfahren und als Referenz dazu nach dem bisherigen semikontinuierlichen Verfahren angeführt.

**Herstellung eines Flüssigsiliconkautschuks nach dem erfindungsgemäßen verfahren**

Die Anlage (1) produziert derzeit 300 kg/h (höhere Durchsätze sind bei Bedarf denkbar) einer Grundmasse bestehend aus Vinylpolysiloxanen (Divinyl-polydimethylsiloxan mit einer Viskosität von ca. 20000 mPa*s) und behandelter Kieselsäure (hydrophobierte Kieselsäure mit einer BET-Oberfläche von ca. 300 m$^2$/g, WACKER HDK SKS 300).

Die Entgasungsanlage (3) befreit den abgekühlten Grundmassenstrom im Vakuum (ca. 100 mbar) von Gaseinschlüssen.

Die Pumpen (4) teilen den Grundmassenstrom in je 150 kg/h A- und B-Teilstrom für die Erzeugung der entsprechenden A- und B-Komponenten auf.

An dem Mischer (6) werden in den A-Strom eindosiert (Einspeisstellen 5) und homogenisiert:

- 14kg/h Verdünnungspolymer Divinyl-polydimethylsiloxan mit einer Viskosität von ca. 20000 mPa*s
- 240 g/h Pt-Katalysator (Pt-Komplex mit Alkenylsiloxanliganden)
- 110 g/h Inhibitor 1-Ethinylcyclohexan-1-ol an einem nachgeschalteten Mischer

An Mischer (6) werden in den B-Strom eindosiert (Einspeisstellen 5) und homogenisiert:

- 7 kg/h Verdünnungspolymer Divinyl-polydimethylsiloxan mit einer Viskosität von ca. 20000 mPa*s
- 7 kg/h Organohydrogenpolysiloxan (Si-H Vernetzer mit H-Gehalt von etwa 0,45 Gew.%)
- 130 g/h Inhibitor 1-Ethinylcyclohexan-1-ol

**Vergleichsbeispiel:**

**Herstellung eines Flüssigsiliconkautschuks nach dem bisherigen Verfahren**

300 kg Grundmasse aus (1) wird zu gleichen Teilen in einen A- und einen B-Kessel eingebracht.

Mittels diskontinuierlichen Mischers werden zur A-Komponente zugesetzt:

- 14 kg Verdünnungspolymer Divinyl-polydimethylsiloxan mit einer Viskosität von ca. 20000 mPa*s
- 240 g Pt-Katalysator (Pt-Komplex mit Alkenylsiloxanliganden)
- 110 g Inhibitor 1-Ethinylcyclohexan-1-ol

Alle Stoffe werden nacheinander zugegeben und sorgfältig eingemischt.

Mittels diskontinuierlichen Mischers werden zur B-Komponente zugesetzt:

- 7 kg Verdünnungspolymer Divinyl-polydimethylsiloxan mit einer Viskosität von ca. 20000 mPa*s
- 7 kg Organohydrogenpolysiloxan (Si-H Vernetzer mit H-Gehalt von etwa 0,45 Gew.% und 24 Si-gebundenem Wasserstoffatomen pro Molekül)
- 130 g Inhibitor 1-Ethinylcyclohexan-1-ol

Alle Stoffe werden nacheinander zugegeben und sorgfältig eingemischt.

Die A- und B-Komponenten aus dem erfindungsgemäßen Verfahren werden im Verhältnis 1:1 gemischt und 5 min bei 170°C vulkanisiert.

Ebenso wird mit den A- und B-Komponenten aus dem Vergleichsbeispiel verfahren.

**Nachstehende Tabelle weist die Werte der einzelnen Kautschuke/Komponenten aus:**

| | Erfindungsgemäßes Verfahren | | Bisheriges Verfahren | |
|---|---|---|---|---|
| | A-Komponente | B-Komponente | A-Komponente | B-Komponente |
| Viskosität [mPa*s](D= 0,89 s$^{-1}$) | 950000 | 860000 | 930000 | 890000 |
| | Vulkanisat | | Vulkanisat | |
| Ansprung-temp. [°C] | 120 | | 120 | |
| T90-Wert [s] | 190 | | 192 | |
| Härte [shore A] | 50 | | 50 | |
| Reissfestigkeit [N/mm$^2$] | 11 | | 11 | |
| Reissdehnung [%] | 565 | | 554 | |

Anhand der Tabelle ist ersichtlich, dass beide Verfahren bezüglich der Homogenität des Mischvorganges identisch sind. Auch bei der Entnahme vieler Stichproben aus dem Produktstrom konnte eindeutig die Homogenität nachgewiesen werden. Die Messwerte dieser Stichproben lagen alle im Bereich der Messstreuung.
Auch Tests an einer Spritzgussmaschine zeigten keinerlei Schwankungen.

**Patentansprüche**

1. Verfahren zur kontinuierlichen Herstellung von additionsvernetzenden Siliconkautschuken auf der Basis von zumindest einem Polyvinylpolysiloxan mit hydrophobiertem Füllstoff in einer Menge von zumindest 10 Gew.% bezogen auf den Siliconflüssigkautschuk, **dadurch gekennzeichnet, dass** die Grundmasse aus Polyvinylpolysiloxan und Füllstoff aus einem Behälter, dessen Volumen sich proportional mit der Entnahme verringert (2), entnommen wird und über eine Pumpe (4a) mit Überdruck an zwei weitere Pumpen (4) gefördert wird, die diese Grundmasse weiterfördern, damit einmal kontinuierlich A hergestellt wird, indem zur Grundmasse zumindest ein Metallkatalysator zugemischt wird und zum anderen gleichzeitig kontinuierlich B hergestellt wird, indem zur Grundmasse aus Polyvinylpolysiloxan und Füllstoff der Vernetzer und Inhibitor zugemischt werden, wobei der Metallkatalysator, Vernetzer und Inhibitor über eine Zudosiereinheit dosiert werden, die die jeweiligen Stoffe zudosieren, wobei die Mischung der Additive mittels eines Dynamikmischers erfolgt.

2. Verfahren nach Anspruch 1, **dadurch gekennzeichnet, dass** ein Dynamikmischer mit Kreuzbalken mit Planetenbewegung verwendet wird.

3. Verfahren nach Anspruch 1 oder Anspruch 2, **dadurch gekennzeichnet, dass** das Verfahren bei Drücken von 3 bis 200 bar durchgeführt wird.

4. Verfahren nach einem oder mehreren der Ansprüche 1 bis 3, **dadurch gekennzeichnet, dass** die Eindosierung bei der Dosiereinheit über Ventile erfolgt.

5. Verfahren nach einem oder mehreren der Ansprüche 1 bis 4, **dadurch gekennzeichnet, dass** die Eindosierung mit einer Toleranz von $\pm 5$ Gew.% bezogen auf das jeweilige zu dosierende Gewicht je Komponente erfolgt, wobei dies in einem Zeitintervall von 3 min erfolgt.

6. Verfahren nach einem oder mehreren der Ansprüche 1 bis 5, **dadurch gekennzeichnet, dass** als hydrophobierter Füllstoff vorhydrophobierter Füllstoff verwendet wird.

7. Verfahren nach einem oder mehreren der Ansprüche 1 bis 6, **dadurch gekennzeichnet, dass** bei der Zudosiereinheit die Stoffe gewichtsabhängig zudosiert werden.

**Claims**

1. Process for the continuous preparation of addition-crosslinking silicone rubbers based on at least one polyvinyl polysiloxane with at least 10% by weight, based on the liquid silicone rubber, of hydrophobicized filler, **characterized in that** it comprises taking the underlying composition made from polyvinyl polysiloxane and filler from a container (2) whose volume reduces proportionally with the amount removed, and conveying the composition by way of a pump (4a) with a positive pressure difference to two further pumps (4) which convey this underlying composition onward, so that firstly A is prepared continuously by admixing at least one metal catalyst with the underlying composition, and secondly B is prepared continuously and simultaneously by admixing the crosslinker and inhibitor with the underlying composition made from polyvinyl polysiloxane and filler, where the metal catalyst, crosslinker, and inhibitor are fed by way of a feed unit which meters in each of the substances, the additives being mixed by means of a dynamic mixer.

2. The process as claimed in claim 1, wherein use is made of a dynamic mixer with a crossblade system with planetary motion.

3. The process as claimed in claim 1 or 2, **characterized in that** the process is carried out at pressures of from 3 to 200 bar.

4. The process as claimed in one or more of claims 1 to 3, wherein the metering-in at the feed unit takes place by way of valves.

**5.** The process as claimed in one or more of claims 1 to 4, wherein the metering-in takes place with a tolerance of V 5% by weight, based on the respective component weight to be fed, during a period of 3 min.

**6.** The process as claimed in one or more of claims 1 to 5, wherein the hydrophobicized filler used comprises pre-hydrophobicized filler.

**7.** The process as claimed in one or more of claims 1 to 6, wherein the metering-in of the substances at the feed unit is gravimetric.

**Revendications**

**1.** Procédé pour la préparation en continu de caoutchoucs de silicone réticulant par addition à base d'au moins un polyvinylpolysiloxane avec une charge hydrofugée en une quantité d'au moins 10% en poids par rapport au caoutchouc liquide de silicone, **caractérisé en ce que** la masse de base, constituée par le polyvinylpolysiloxane et la charge, est prélevée d'un récipient dont le volume diminue proportionnellement au prélèvement (2) et est transportée via une pompe (4a) avec une surpression vers deux autres pompes (4) qui transportent cette masse de base plus loin de manière à produire en continu d'une part A, **en ce qu'**on mélange au moins un catalyseur métallique dans la masse de base et d'autre part, simultanément, B en continu, **en ce qu'**on mélange dans la masse de base constituée par le polyvinylpolysiloxane et la charge, le réticulant et l'inhibiteur, le catalyseur métallique, le réticulant et l'inhibiteur étant dosés chacun via une unité de dosage qui ajoute en dosant les différentes substances, le mélange des additifs étant réalisé via un mélangeur dynamique.

**2.** Procédé selon la revendication 1, **caractérisé en ce qu'**on utilise un mélangeur dynamique avec des pales croisées avec un mouvement planétaire.

**3.** Procédé selon la revendication 1 ou la revendication 2, **caractérisé en ce que** le procédé est réalisé à des pressions de 3 à 200 bars.

**4.** Procédé selon l'une ou plusieurs des revendications 1 à 3, **caractérisé en ce que** le dosage au niveau de l'unité de dosage est réalisé via des soupapes.

**5.** Procédé selon l'une ou plusieurs des revendications 1 à 4, **caractérisé en ce que** le dosage est réalisé avec une tolérance de $\pm$5% en poids par rapport à chaque poids à doser par composant, ledit dosage étant réalisé en un intervalle de temps de 3 min.

**6.** Procédé selon l'une ou plusieurs des revendications 1 à 5, **caractérisé en ce qu'**on utilise comme charge hydrofugée une charge hydrofugée au préalable.

**7.** Procédé selon l'une ou plusieurs des revendications 1 à 6, **caractérisé en ce qu'**au niveau de l'unité de dosage, les substances sont dosées en fonction du poids.

*Fig. 1*